(19)

Europäisches
Patentamt
European
Patent Office
Office européen
des brevets

(11) **EP 3 852 063 A1**

(12) **EUROPEAN PATENT APPLICATION**

(43) Date of publication:
**21.07.2021 Bulletin 2021/29**

(51) Int Cl.:
***G06T 7/33*** (2017.01)          ***G06T 7/62*** (2017.01)
***G06T 7/73*** (2017.01)

(21) Application number: **20152045.9**

(22) Date of filing: **15.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Bayerische Motoren Werke
Aktiengesellschaft
80809 München (DE)**

(72) Inventor: **Notz, Dominik
Belmont, 94002 (US)**

(54) **A CAMERA SYSTEM AND A METHOD FOR A CHARACTERIZATION OF AN ENVIRONMENT**

(57)     The present disclosure relates to a camera system (100) for a characterization of an environment. The camera system (100) comprises a camera (110) configured to record image data of the environment and a data processing circuitry (120). The data processing circuitry (120) is configured to detect at least four objects (130) within the image data and detect the same objects (130) on a digital map (160) of the environment. Further, the data processing circuitry (120) is configured to determine from the image data first coordinates (141) of the objects (130) within a first coordinate system (151) of an image plane (114) of the camera (110) and determine second coordinates (142) of the objects (130) within a second coordinate system (152) of the digital map (160). Moreover, the data processing circuitry (120) is configured to determine a linear transformation (H) between the first coordinate system (151) and the second coordinate system (152) using point correspondences between the first coordinates (141) and the second coordinates (142) of each of the objects (130) for a characterization of the environment in the second coordinate system (152) by applying the linear transformation (H) to the image data

Fig. 1a

EP 3 852 063 A1

## Description

### Field

Embodiments of the present disclosure relate to a camera system for a characterization of an environment, a method for characterizing an environment and a computer program.

### Background

Nowadays, monitoring road traffic is increasingly important, for example, in connection with a development of a traffic simulation model for training machine learning based processor circuitries which are used for autonomous driving.

Common concepts for monitoring the road traffic provide for recording the road traffic with multiple cameras for stereo vision, for example, to measure distances between vehicles.

By definition, stereo vision requires at least two cameras. Depending on a distance to an object, the two stereo cameras need to be closer to or further away from each other to measure a position of to the object with an appropriate accuracy. Thus, an application of such a camera system based on stereo vision may be limited due to a static baseline between the cameras.

Further concepts provide for using machine learning to estimate the position of the object from image data of a single camera. This may require an acquisition and preparation of labelled training data for training a machine learning based processor. The acquisition and preparation of the labelled training data may cause additional costs.

The documents US 2014/0270484 A1 and US 2015/0254834 A1 both describe a concept for a localization of moving objects using structure from motion (SFM). By definition, SFM requires a relative motion between a camera and an object to be localized.

Thus, the concept of the above mentioned document may not be suitable for monitoring a static scene of the road traffic (e.g. a traffic jam).

Hence, there may be a demand of an improved concept for a characterization of an environment.

### Summary

This demand can be satisfied by the appended independent and dependent claims of the present disclosure.

According to a first aspect the present disclosure relates to a camera system for a characterization of an environment. The camera system comprises a camera configured to record image data of the environment and a data processing circuitry. The data processing circuitry is configured to detect at least four objects within the image data and detect the same objects on a digital map of the environment. Further, the data processing circuitry is configured to determine from the image data first coordinates of the objects within a first coordinate system of an image plane of the camera and determine second coordinates of the objects within a second coordinate system of the digital map. Moreover, the data processing circuitry is configured to determine a linear transformation between the first and the second coordinate system using point correspondences between the first and second coordinates of each of the objects for a characterization of the environment in the second coordinate system by applying the linear transformation to the image data.

The environment, for example, includes a road, merging lanes, a crossroad or other public areas. For this, the camera may be installed at an infrastructure of the environment, such as buildings, traffic lights, overpasses, bridges or other static structures.

The image data, for example, comprises one or more images of the environment within a visual and/or a non-visual spectral range. The camera can therefore be a still or a movie camera which records the environment in the visual spectral range, in the ultraviolet and/or in the infrared spectrum depending on an application of the camera system.

The image plane, for example, relates to a photosensitive surface of a sensor of the camera. Thus, the first coordinate system, for example, corresponds to a two-dimensional Cartesian coordinate system.

The image data is, for example, indicative one or more two-dimensional images of the environment.

The digital map, for example, is a so-called high definition (HD) map which represents the environment with a precision at centimeter-level. Hence, a resolution of the HD map can be appropriate to resolve objects like lane markings, guardrails and/or manhole covers located within the environment.

Similar to the image data, the digital map can represent the environment in two-dimensions.

The processor circuitry may detect at least four objects included in both the digital map and the image data by reference, for example, to extrinsic characteristics (e.g. color, shape, size and/or orientation). For this, the data processing circuitry may apply object detection to the digital map and to the image data.

The linear transformation, for example, is indicative of a matrix ("homography matrix") mapping the first coordinate system onto the second coordinate system. For example, the linear transformation is a $3\times3$ matrix.

The linear transformation can be calculated from point correspondences of the first and the second coordinates. The point correspondences are, for example, indicative of relationships of the first and the second coordinates of same objects.

As mentioned above, the objects can be remarkable objects, such as lane markings, guardrails and/or manhole covers and the like. For example, beginnings and endings of lane markings can be used since they can be easily located in both the image data and on the digital map 160, as stated in more detail below.

The linear transformation can be determined in connection with an initialization of the camera system and may be used for a transformation of further image data of the camera into the second coordinate system. Thus, the camera system may enable characterizing the environment in the second coordinate system. Consequently, this may allow, for example, to determine distances, positions and/or velocities of further objects of the environment in the second coordinate system.

In some embodiments of the present disclosure, the second coordinate system is based on geographic coordinates.

The digital map therefore can be understood as a representation of the environment from a bird's-eye view.

This, for example, allows to characterize the environment in geographic coordinates. For example, this allows to determine positions of the further objects in geographic coordinates from apparent positions subjected to distortions which may arise from monitoring the environment from a tilted perspective.

In some embodiments of the present disclosure, the data processing circuitry is further configured to determine from the image data a bounding box representing a target of the environment in the first coordinate system and apply the linear transformation to the bounding box for a characterization of the target in the second coordinate system.

The bounding box is, for example, a two-dimensional (2D) or a three-dimensional (3D) imaginary box projected onto the image data for an approximate representation of the target.

For example, the bounding box is adapted to encompass all pixels of the image data which are associated with the target. The target can be a moving object, such as a vehicle (e.g. car, truck, bus, motorcycle or the like) or a pedestrian.

Thus, the target can be characterized by reference to the bounding box. For example, dimensions (e.g. a width and/or a length of the vehicle) can be approximately determined from a width and a length of the bounding box, respectively.

Moreover, the data processing circuitry can be configured to distinguish between multiple targets. For example, the data processing circuitry can associate multiple vehicles with a (vehicle) class (e.g. car, truck, bus, motorcycle) with reference to the dimensions of the vehicles.

To determine the lateral and/or longitudinal size of the target in the second coordinate system, the data processing circuitry may apply the linear transformation to the bounding box.

This may require a less computational power than a direct measurement of the vehicle's width and/or length from a cluster of pixels associated with the vehicle.

In some embodiments of the present disclosure, the data processing circuitry is further configured to determine a position of the bounding box within the first coordinate system from the image data. Further, the data processing circuitry can apply the linear transformation to the position of the bounding box within the first coordinate system for determining a position of the bounding box within the second coordinate system.

To this end, the data processing circuitry can define a reference point specifying the position of the bounding box. The reference point can be included in the bounding box, such as a center point of a side of the bounding box. Alternatively, the reference point can be indicative of an intersection point of connecting lines of different vertexes of the bounding box, a symmetry point or a point of a symmetry axis of the bounding box.

Consequently, the reference point may approximately indicate a center of the vehicle's front or rear bumper or a vehicle's center of rotation.

Thus, a position of the reference point within the first coordinate system can indicate the position of the bounding box. The position of the bounding box can be indicative of (Cartesian) coordinates of the reference point.

In order to determine the position of the target, such as for the vehicle, the data processing circuitry can apply the homography matrix to the coordinates of the reference point.

Therefore the position of the target may be indicative of coordinates within the second coordinate system.

If the second coordinate system is based on geographic coordinates, the position of the target may be indicative of geographic coordinates.

In some embodiments of the present disclosure, the image data comprises a first and at least a subsequent second image. The data processing circuitry can be further configured to determine from the first image a position of a first bounding box representing the target within the first coordinate system and from the second image a second position of a second bounding box representing the target within the first coordinate system. Moreover, the data processing circuitry can be configured to determine a first and a second position of the target within the second coordinate system by applying the linear transformation to the first and the second position of the first and the second bounding box within the first coordinate system.

The camera can comprise a movie camera to record two or more subsequent images of the environment.

Analogously to above mentioned embodiments, the data processing circuitry can determine the first and the second bounding box, as well as the corresponding first position and the second position, respectively.

For example, in order to obtain a distance between the first and the second position of the target in geographic coordinates, the data processing circuitry can apply the linear transformation or the homography matrix to the first and the second position of the respective bounding box.

In some embodiments of the present disclosure, the data processing circuitry is further configured to determine a velocity of the target within the second coordinate system from the first and the second position of the target within the second coordinate system and a temporal distance between recording the first and the second image.

For example, the data processing circuitry may obtain a travelled distance between the first and the second position of the target within the second coordinate system to obtain the velocity of the target from a ratio of the travelled distance and the temporal distance. In particular, the temporal distance may depend on a frame rate of the camera.

The first position, the second position and/or the velocity of the target can be used for tracking purposes or analyzing a driving behavior of the vehicle, for example.

In some embodiments of the present disclosure, the data processing circuitry is further configured to determine a trajectory of the target between the first and the second position of the target within the second coordinate system.

The data processing circuitry, for example, uses interpolation to determine the trajectory.

The trajectory can be used to record a travelled route of the vehicle, for example, for analyzing the driving behavior of the vehicle.

According to a second aspect, the present disclosure relates to a method for characterizing an environment. The method comprises recording image data of the environment and detecting at least four objects within the image data and detect the same objects on a digital map of the environment. Further, the method provides for determining from the image data first coordinates of the objects within a first coordinate system of an image plane of the camera and determining second coordinates of the objects within a second coordinate system of the digital map. Moreover, the method comprises determining a linear transformation between the first and the second coordinate system using point correspondences between the first and the second coordinates of each of the objects for a characterization of the environment in the second coordinate system by applying the linear transformation to the image data.

The method, for example, can be executed by any one of the camera system described in connection with the above mentioned embodiments of the disclosure.

According to a third aspect, the present disclosure relates to a computer program comprising instructions which, when executed by at least one processor, causes the processor to perform the above mentioned method.

**Brief description of the Figures**

Some examples of apparatuses and/or methods will be described in the following by way of example only, and with reference to the accompanying figures, in which

Fig. 1a illustrates a camera system for a characterization of an environment with a camera and a data processing circuitry;

Fig. 1b illustrates a detection of an object with the camera system;

Fig. 1c illustrates an example of a digital map of the environment;

Fig. 1d illustrates a linear transformation between a first coordinate system of an image plane of the camera and a second coordinate system of the digital map of the environment;

Fig. 2a illustrates an example of image data of the camera;

Fig. 2b illustrates image data transformed by the linear transformation;

Fig. 3 illustrates a characterization of a vehicle using bounding boxes;

Fig. 4a illustrates a first example of a vehicle's trajectory determined from subsequent images of the image data;

Fig. 4b illustrates a second example of the vehicle's trajectory; and

Fig. 5 schematically illustrates a method for characterizing the environment.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Known camera systems use machine learning models to detect objects, e.g. vehicles, on images. Such machine learning models, for example, a characterization of an environment by determining 2D or 3D bounding boxes around the objects of interest. The objects thus can be localized in images coordinates but an object's position in geographical coordinates may remain unknown.

Hence, there may be a demand of an improved concept for a characterization of an environment.

A basic idea of the present disclosure is to determine an object's position in world, road or geographical coordinates based on a homography between an image plane of a camera and a road surface.

A homography/linear transformation relates planar surfaces to each other by a $3{\times}3$ matrix H.

For an approximation, the road surface will be assumed as a plane in geographical coordinates. For this, a digital map of the environment can be used to determine the matrix H through a comparison with image data of the camera.

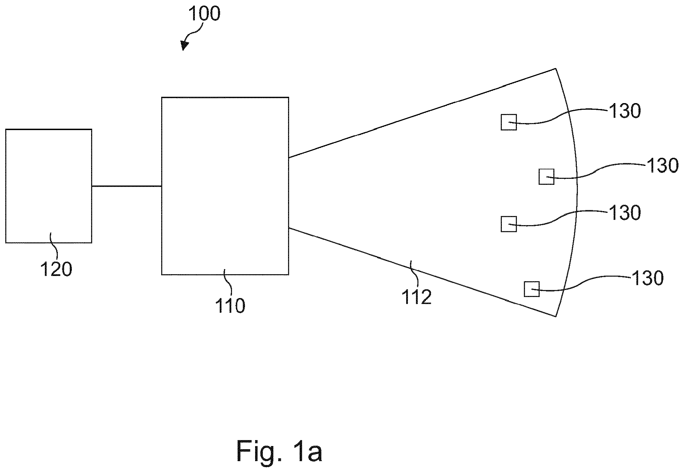

Fig. 1a illustrates a camera system 100 for a characterization of an environment with a camera 110 and a data processing circuitry 120.

The camera 110 is configured to record image data of the environment. Further, the camera 110 can be coupled to a data processing circuitry to transmit the image data. The image data can be indicative of the environment included in a field of view 112 of the camera 110.

The camera 110, which is for example mounted to an overpass or a post, such that the camera 110 can oversee a road scene of interest within the environment.

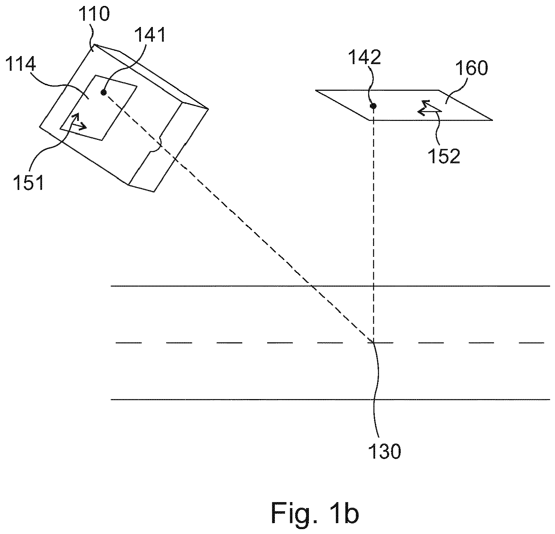

The data processing circuitry 110 may detect at least four objects 130 within the image data and detect the same objects on a digital map 160 of the environment, as illustrated in Fig. 1b.

The digital map 160 can be a high definition (HD) map showing the environment and, for example, a road from a bird's-eye view.

In order to calculate a linear transformation, for example represented by the matrix H, the data processing circuitry 110 can determine from the image data first coordinates 141 of the objects 130 within a first coordinate system 151 of an image plane 114 of the camera 110.

For the same purpose, the data processing circuitry 120 can determine second coordinates 142 of the objects 130 within a second coordinate system 152 of the digital map 160.

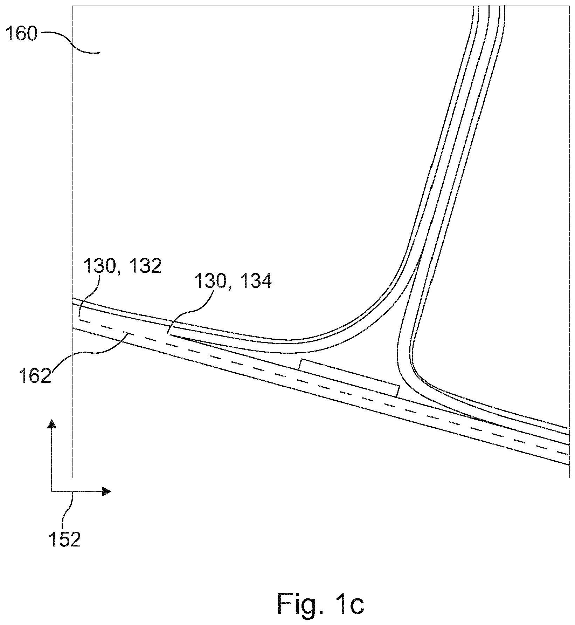

Fig. 1c shows the digital map 160 in more detail. As can be seen, the digital map 160, for example, includes lane markings 162, a road geometry and/or road boundaries. Consequently, the objects 130 can be static objects, such as edges 132 or intersections 134 of the line markings.

The first and the second coordinates 141 and 142 can be derived from positions of pixels of the objects 130 on the image plane 114 and the digital map 160, respectively.

Subsequently, the data processing circuitry 120 can determine a linear transformation between the first and the second coordinate system 151 and 152 using point correspondences between the first and second coordinates 141 and 142 of each of the objects 130 for a characterization of the environment in the second coordinate system 152 by applying the linear transformation to the image data.

The linear transformation/homography matrix H can be determined with at least four point correspondences between the coordinate systems 151 and 152. To this end, one need to find at least four corresponding locations or objects in the image data and the digital map 160. For this, the data processing circuitry 120, for example, can detect same objects in the image data and the digital map 160 using object recognition.

The point correspondences can be understood as relations between the coordinates 141 and 142. The point correspondences can be expressed as a linear equation as follows:

$$\begin{bmatrix} u \\ v \\ 1 \end{bmatrix} = \underbrace{\begin{bmatrix} h_1 & h_2 & h_3 \\ h_4 & h_5 & h_6 \\ h_7 & h_8 & h_9 \end{bmatrix}}_{H} \cdot \begin{bmatrix} x \\ y \\ 1 \end{bmatrix},$$

wherein $x$ and $y$ can be referred to as a set of the first coordinates 141, $u$ and $v$ can be referred to as a set of the second coordinates 142 and $h_1, ..., h_9$ correspond to elements of the linear transformation/homography matrix H. Due to a normalization of H according to:

$$h_9 = 1$$

or

$$h_1^2 + \cdots + h_9^2 = 1,$$

a number of degrees of freedom of the linear equation can be reduced to eight, such that the linear equation can be solved using four point correspondences of the first and the second coordinates 141 and 142 to obtain the homography matrix H.

An accuracy of H increases with more point correspondences.

The homography matrix H can be determined, for example, in connection with an initialization of the camera system 100 in order to transform further image data referring to the first coordinate system 151 into transformed image data referring to the second coordinate system 152 by applying the homography matrix H to the further image data.

In other words, with H any point on the road in the image data can be transformed to its corresponding location in the digital map 160.

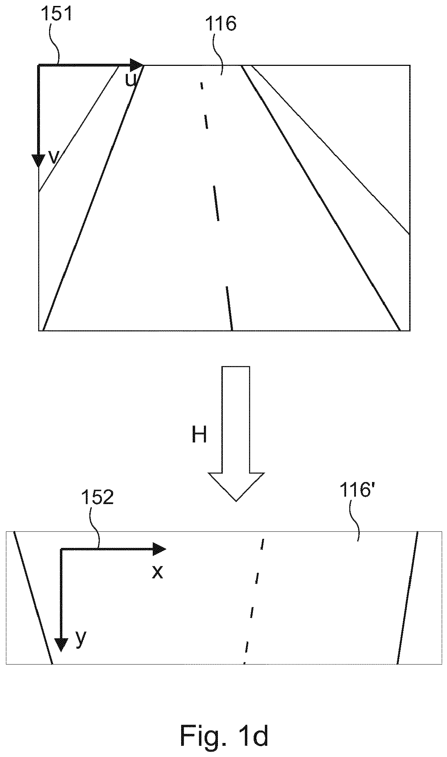

As can be seen in Fig. 1d, the further image data may comprise an image 116 from a perspective of the camera 110.

The data processing circuitry 120 can apply the homography matrix H to the image 116 referring to the first coordinate system 151 to obtain a transformed image 116' based on the second coordinate system 152.

In some embodiments, the second coordinates 152 may correspond to a geographical coordinate system based on geographical coordinates.

In other words, the digital map 160 may represent a globally accurate bird's-eye view perspective, where each location on the digital map 160 is mapped to an exact location on the world.

This, for example, enables the data processing circuitry 120 to characterize the vehicle 170 in terms of its position or geometry within the geographical coordinate system 152 through further signal processing based on the transformed image 116'.

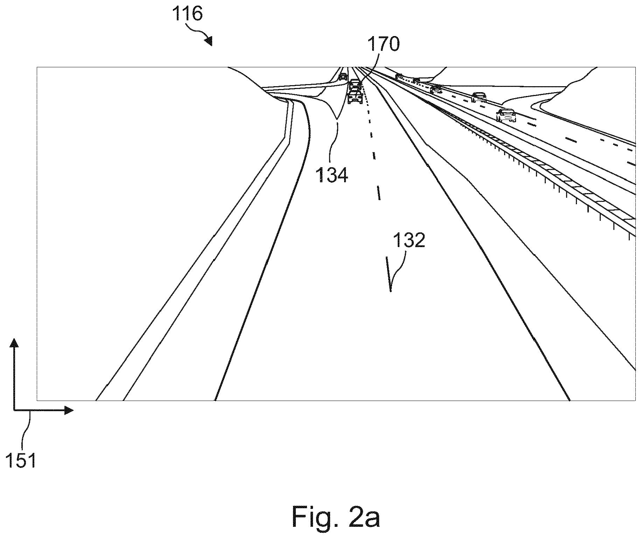

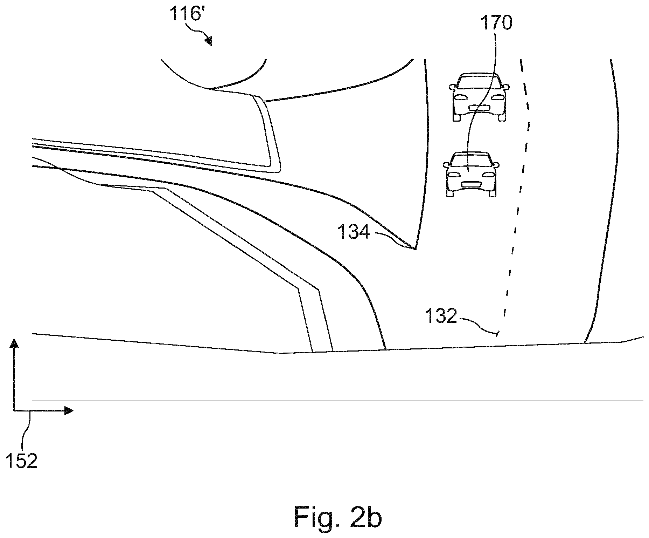

The previously described concept can be illustrated in connection with a real example shown in Fig. 2a and Fig. 2b.

As shown in Fig. 2a, the image 116, for example, shows a traffic scene within the environment.

The homography matrix H may be determined using among others the edge 132 and the intersection 134 of lane markings.

As the camera 110 observes the environment or the scene with a tilted perspective, the lane markings which are in fact equally spaced appear to have different distances to each other. This shows why a position or a geometry of the vehicle 170 or of other objects within the environment cannot be directly derived from the image 116.

As illustrated in Fig. 2b, the data processing circuitry 120 may obtain a transformed image 116' from the image 116 using the homography matrix H.

An equal spacing of the lane markings in the transformed image 116' indicates that distances within the transformed image 116' are approximately related to real distances within the environment through a proportional relationship.

Hence, the transformed image 116' can be used for a spatial characterization of the environment using further signal processing.

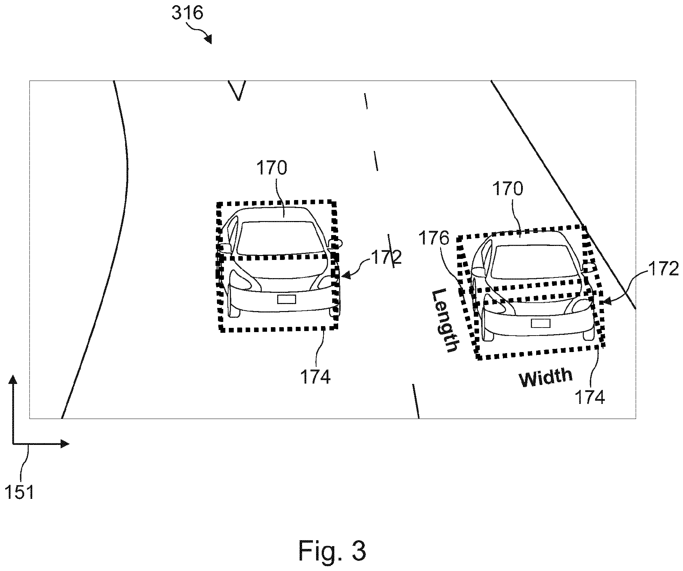

By way of example, Fig. 3 shows further images 316 of the image data. A skilled person having benefit from the present disclosure will appreciate that the data processing circuitry 120 can detect objects in the image 316 using a trained machine learning model and determine 2D or 3D bounding boxes 172 around the vehicles 170, as depicted in the image 316. Those bounding boxes 172 can be used for an approximate characterization of the vehicles, as stated in more detail below.

The data processing circuitry 120 can determine a width 174 and/or a length 176 of the bounding boxes 172.

The bounding boxes 172 can be transformed in the geographical coordinate system 152 using the homography matrix H for a characterization of the vehicles 170 with regard to their geometry and/or their positions/locations. For this, coordinates representing the bounding boxes 172 can be transformed using the homography matrix H.

For example, in this way, the data processing circuitry 120 can determine the width and/or the length of the bounding boxes 172 in geographic coordinates for an approximate determination of real dimensions of the vehicles 170.

In some embodiments, the machine learning model may additionally be configured to determine a class (vehicle, truck, bus, motorcycle, etc.) of the vehicles 170, for example, by reference to the dimensions of the vehicles 170.

Moreover, the data processing circuitry 120 can transform the bounding boxes 172 using the homography matrix H to determine geographical coordinates of vertexes of the bounding boxes 172. In particular, the vertexes of a lower plane of the bounding boxes 172 can be used for a determination of the geographical coordinates of the vertexes. This may allow an approximate localization of the vehicles 170 in the geographical coordinate system.

Furthermore, if 2D bounding boxes are used the width of the object can be determined, and if 3D bounding boxes are used both the width and the length of the vehicles 170 can be determined.

For specifying a location of the vehicles 170, the data processing circuitry 120 may define a reference point which, for example, corresponds to a front center point, i.e. a center between the two front bottom vertexes.

In some embodiments of the present disclosure, the objects/vehicles 170 can be tracked over several camera frames (e.g. multiple images of the image data).

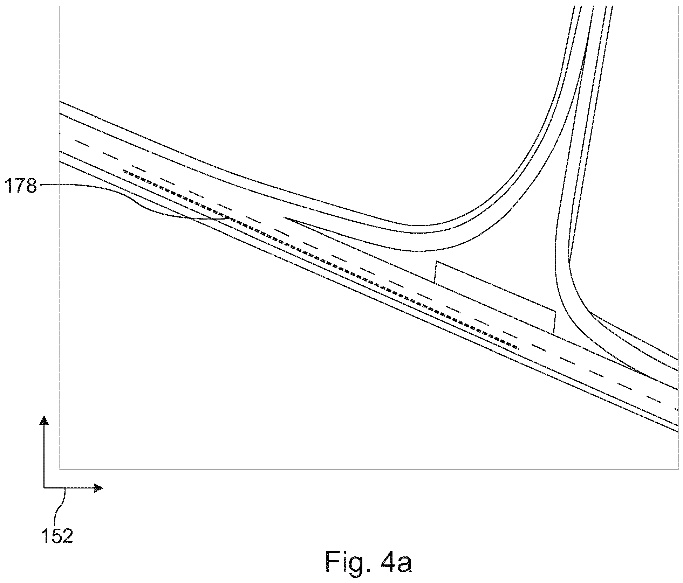

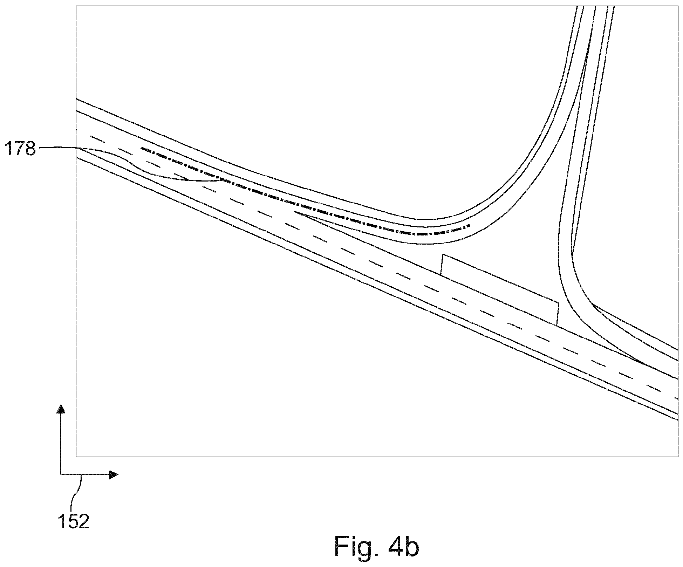

As illustrated in Fig. 4a and Fig. 4b, this allows the data processing circuitry 120 to determine trajectories 178 of the vehicles 170 in the geographical coordinate system 152. For this, the data processing circuitry may interpolate subsequent positions of the vehicles 170. To this end, the data processing circuitry 120 can determine the subsequent positions from subsequent images of the image data in the geographical coordinate system, as described above.

In some applications of the camera system 100, the camera system 100 can be used to determine multiple trajectories 178 and/or velocities of multiple vehicles 170 to analyze a driving behavior of the vehicles 170. For example, this may enable a machine learning based processor circuitry to learn a driving behavior of the vehicles 170 at merging lanes or in case of a lane change.

To this end, the data processing circuitry 120 can be further configured to determine the velocities of the vehicles 170 from the subsequent positions of the vehicles 170 within the geographical coordinate system and a temporal distance between the subsequent images. The temporal distance between the subsequent images may be determined from a frame rate of the camera 110.

For some use cases, multiple camera systems can be placed along a road, such that every camera system 100 observes one of multiple connected road sections. Thus, the camera systems 100 can communicate the positions of the vehicles 170 within the road sections to a common data processing circuitry to define trajectories of the vehicles 170 along the road. In this way, one can determine the trajectories 178 of the vehicles 170 over any desired range.

For this, the cameras of the camera systems 100, for example, can be placed along the road with up to 150m distance from each other.

Subsequently, the trajectories of the vehicles 170 can be mapped onto another HD map. This allows to analyze the driving behavior of different road users and their interactions with each other. Such a behavior analyzation can be useful for a development of autonomous driving.

For example, correct behavior could be imitated or simulated via imitation learning.

In another possible application, the camera system 100 may enable imitation learning to learn a distribution of human driving behavior which allows to create smart agent models to establish a realistic simulation model.

Furthermore, applications within other areas exist as well. This invention can be used in connection with any application which require a localization of objects. For example, the camera system 100 can be used in connection with automated production facilities, surveillance, human and animal behavior analyses.

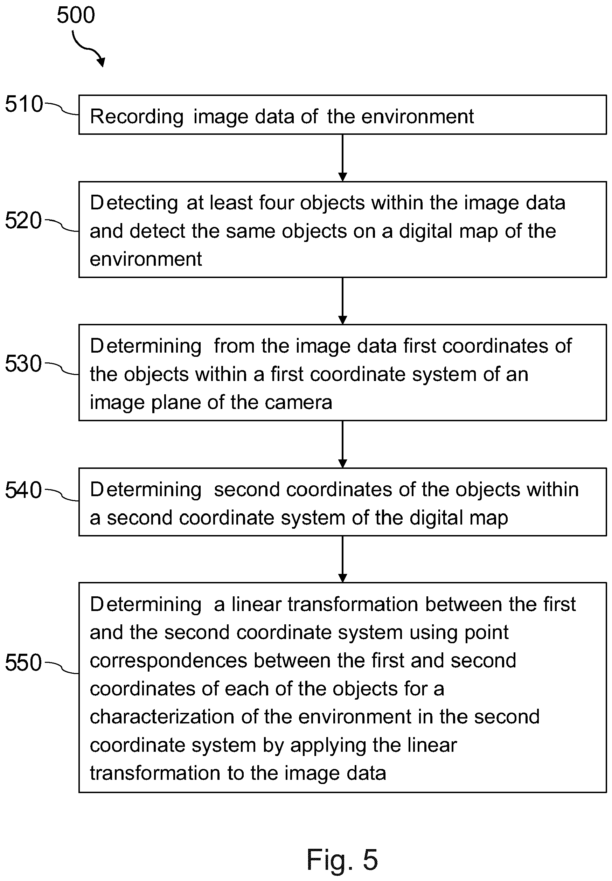

Fig. 5 schematically illustrates a method 500 for characterizing the environment.

The method 500 provides for recording 510 image data of the environment. As mentioned in connection with the previously described example, the image data can be recorded by a camera.

Further, the method provides for detecting 520 at least four objects within the image data and detect the same objects on a digital map of the environment.

For this, a data processing circuitry, as described previously, can be configured to detect the same objects using object recognition.

Alternatively, the objects can be detected manually. For example, a person may tag the objects in the image data and the digital map by hand.

Further, the method 500 comprises determining 530 from the image data first coordinates of the objects within a first coordinate system of an image plane of the camera and determining 540 second coordinates of the objects within a second coordinate system of the digital map.

Moreover, the method 500 provides for determining 550 a linear transformation between the first and the second coordinate system using point correspondences between the first and second coordinates of each of the objects for a characterization of the environment in the second coordinate system by applying the linear transformation to the image data.

The method 500, for example, can be executed with embodiments of the camera system 100.

Various embodiments of the method 500 may incorporate some features described in connection with the camera system 100.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A camera system (100) for a characterization of an environment, comprising:

   a camera (100) configured to:
   record image data of the environment; and
   a data processing circuitry (120) configured to:

   detect at least four objects (130) within the image data and detect the same objects ! (130) on a digital map (160) of the environment;
   determine from the image data first coordinates (141) of the objects (130) within a first coordinate system (151) of an image plane (114) of the camera (110);
   determine second coordinates (142) of the objects (130) within a second coordinate system (152) of the digital map (160); and
   determine a linear transformation (H) between the first coordinate system (151) and the second coordinate system (152) using point correspondences between the first coordinates (141) and the second coordinates (142) of each of the objects (130) for a characterization of the environment in the second coordinate system (152) by applying the linear transformation (H) to the image data.

2. Camera system (100) of claim 1, wherein the second coordinate system (152) is based on geographic coordinates.

3. Camera (100) system of any one of the preceding claims, wherein the data processing circuitry (120) is further configured to:

   determine from the image data a bounding box (172) representing a target (170) of the environment in the first coordinate system (151); and
   apply the linear transformation (H) to the bounding box (172) for a characterization of the target (170) in the second coordinate system (152).

4. Camera system (100) of claim 3, wherein the data processing circuitry (120) is further configured to:

   determine a position of the bounding box (172) within the first coordinate system (151) from the image data; and
   apply the linear transformation (H) to the position of the bounding box (172) within the first coordinate system (151) for determining a position of the bounding box (172) within the second coordinate system (152).

5. Camera system of claim 3 or 4,
   wherein the image data comprises a first and at least a subsequent second image; and
   wherein the data processing circuitry (120) is further configured to

   determine from the first image a first bounding box representing the target (170) of the environment in the first coordinate system (151);
   determine from the second image a second bounding box representing the target (170) of the environment in the first coordinate system (151);
   determine a position of the first bounding box within the first coordinate system (151);
   determine a second position of the second bounding box within the first coordinate system (151); and
   determine a first and a second position of the target (170) within the second coordinate system by applying the linear transformation (H) to the first and the second position of the first and the second bounding box within the first coordinate system (151).

6. Camera system (100) of claim 5, wherein the data processing circuitry (120) is further configured to determine a velocity of the target (170) within the second coordinate system (152) from the first and the second position of the target (170) within the second coordinate system (152) and a temporal distance between recording the first and the second image.

7. Camera system (100) of claim 6, wherein the data processing circuitry (120) is further configured to determine a trajectory (178) of the target (170) between the first and the second position of the target (170) within the second coordinate system (152).

8. A method (500) for characterizing an environment, comprising:

   recording (510) image data of the environment;
   detecting (520) at least four objects (130) within the image data and detect the same objects (130) on a digital map (160) of the environment;
   determining (530) from the image data first coordinates (141) of the objects (130) within a first coordinate system (151) of an image plane (114) of the camera (110);
   determining (540) second coordinates (142) of the objects (130) within a second coordinate system (152) of the digital map (160); and
   determining (550) a linear transformation (H) between the first coordinate system (151) and the second coordinate system (152) using point correspondences between the first coordinates (141) and the second coordinates (142) of each of the objects (130) for a characterization of the environment in the second coordinate system (152) by applying the linear transformation (H) to the image data.

9. A computer program comprising instructions which, when executed by at least one processor, causes the processor to perform the method (500) of claim 8.

Fig. 1a

Fig. 1b

Fig. 1c

151    116

u

v

H

152    116'

x

y

Fig. 1d

EP 3 852 063 A1

Fig. 2a

14

Fig. 2b

Fig. 3

178

152

Fig. 4a

Fig. 4b

500

510 — Recording image data of the environment

520 — Detecting at least four objects within the image data and detect the same objects on a digital map of the environment

530 — Determining from the image data first coordinates of the objects within a first coordinate system of an image plane of the camera

540 — Determining second coordinates of the objects within a second coordinate system of the digital map

550 — Determining a linear transformation between the first and the second coordinate system using point correspondences between the first and second coordinates of each of the objects for a characterization of the environment in the second coordinate system by applying the linear transformation to the image data

Fig. 5

Europäisches
Patentamt

European
Patent Office

Office européen
des brevets

# EUROPEAN SEARCH REPORT

Application Number

EP 20 15 2045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REN XINHE ET AL: "Learning Traffic Behaviors by Extracting Vehicle Trajectories from Online Video Streams", 2018 IEEE 14TH INTERNATIONAL CONFERENCE ON AUTOMATION SCIENCE AND ENGINEERING (CASE), IEEE, 20 August 2018 (2018-08-20), pages 1276-1283, XP033463335, DOI: 10.1109/COASE.2018.8560597 [retrieved on 2018-12-04] * section IV.D; figure 1 * * section IV.E, paragraph 1 * * section IV.F; figure 4 * * section V.B, paragraph 1 * * section VII.C * ----- | 1-9 | INV. G06T7/33 G06T7/62 G06T7/73 |
| X | MOAYED ZAHRA ET AL: "Surveillance-based Collision-time Analysis of Road-crossing Pedestrians", 2019 IEEE INTELLIGENT TRANSPORTATION SYSTEMS CONFERENCE (ITSC), IEEE, 27 October 2019 (2019-10-27), pages 2361-2366, XP033668774, DOI: 10.1109/ITSC.2019.8917448 [retrieved on 2019-11-27] * section III; figures 5-6 * ----- -/-- | 1-9 | TECHNICAL FIELDS SEARCHED (IPC) G06T |

The present search report has been drawn up for all claims

| Place of search | Date of completion of the search | Examiner |
|---|---|---|
| Munich | 29 April 2020 | Kollreider, Klaus |

EPO FORM 1503 03.82 (P04C01)

page 1 of 2

Europäisches
Patentamt

European
Patent Office

Office européen
des brevets

**EUROPEAN SEARCH REPORT**

Application Number

EP 20 15 2045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOAYED ZAHRA ET AL: "Traffic intersection monitoring using fusion of GMM-based deep learning classification and geometric warping", 2017 INTERNATIONAL CONFERENCE ON IMAGE AND VISION COMPUTING NEW ZEALAND (IVCNZ), IEEE, 4 December 2017 (2017-12-04), pages 1-5, XP033369627, DOI: 10.1109/IVCNZ.2017.8402465 [retrieved on 2018-07-03] * sections III, III.A-III.B; figure 4 * | 1-9 | |
| X | TSAI TSUNG-HAN ET AL: "Vision based indoor positioning for intelligent buildings", 2016 2ND INTERNATIONAL CONFERENCE ON INTELLIGENT GREEN BUILDING AND SMART GRID (IGBSG), IEEE, 27 June 2016 (2016-06-27), pages 1-4, XP032943715, DOI: 10.1109/IGBSG.2016.7539419 [retrieved on 2016-08-09] * section III.B; figures 3-4 * * section IV.C; figures 7-8 * | 1-5,8,9 | TECHNICAL FIELDS SEARCHED (IPC) |

The present search report has been drawn up for all claims

| Place of search | Date of completion of the search | Examiner |
|---|---|---|
| Munich | 29 April 2020 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 852 063 A1**

**Patent documents cited in the description**

- US 20140270484 A1

- US 20150254834 A1